# EUROPEAN PATENT SPECIFICATION

(11) **EP 0 668 963 B1**
(45) Date of publication and mention of the grant of the patent: **20.05.1998**
(21) Application number: 94927542.4
(22) Date of filing: 02.09.1994
(51) Int. Cl.: F02D 41/20, F02D 41/22

(54) **FAULT DIAGNOSIS METHOD FOR INJECTORS OF INTERNAL COMBUSTION ENGINE HIGH-PRESSURE INJECTION SYSTEMS**
FEHLERDIAGNOSEVERFAHREN FÜR DIE EINSPRITZDÜSE VON HOCHDRUCKEINSPRITZSYSTEMEN DER BRENNKRAFTMASCHINE
PROCEDE DE DIAGNOSTIC DE DEFAILLANCE DES INJECTEURS DE SYSTEMES D'INJECTION A HAUTE PRESSION DE MOTEURS A COMBUSTION INTERNE

(30) Priority: 07.09.1993 IT TO930653
(43) Date of publication of application: 30.08.1995
(73) Proprietor: ROBERT BOSCH GMBH, 70442 Stuttgart (DE)
(72) Inventor: GROPPO, Riccardo, I-10060 Roletto (IT); TUBETTI, Paolo, I-10036 Settimo Torinese (IT); BORTIGNON, Giorgio, I-10045 Piossasco (IT)
(86) International application number: EP9402919
(87) International publication number: WO9507409

(56) References cited:
- EP-A- 0 249 448
- EP-A- 0 358 972
- EP-A- 0 464 731
- US-A- 4 746 869
- US-A- 5 203 868
- PATENT ABSTRACTS OF JAPAN vol. 16, no. 403 (E-1254) 26 August 1992 & JP,A,04 133 693 (TOKYO ELECTRIC) 7 May 1992

## Description

### TECHNICAL FIELD

The present invention relates to a fault diagnosis method for the injectors of internal combustion engine high-pressure injection systems, in particular for detecting short-circuiting or open circuits on the injector coils.

### BACKGROUND ART

As is known, high-pressure injection systems comprise a number of injectors, opening and closing of which are controlled by means of a respective coil and a control circuit. Any short-circuiting or open circuits on the coil must therefore be detected immediately to ensure correct operation of the injector and also prevent damage to the injector control circuit. This applies in particular to short-circuiting of the injector, which, if not detected inmediately, may result in such high currents as to irreparably damage the electronic components of the control circuit.

The EP-A-249 448 shows a fault diagnosis method for a coil. A short or open circuit of a coil is detected by charging the coil and then discharching it into a capacitor. The charge of the capacitor is then compared by comparing the surge voltage with a reference value.

### DISCLOSURE OF INVENTION

It is an object of the present invention to provide a straightforward, reliable method of diagnosing short-circuiting and open circuits on injectors.

According to the present invention, there is provided a fault diagnosis method for the injectors of an internal combustion engine having the features of claim 1 or 2.

### BRIEF DESCRIPTION OF DRAWINGS

A preferred, non-limiting embodiment of the present invention will be described by way of example with reference to the accompanying drawings, in which:
Figure 1 shows an electric diagram of the circuit controlling the injectors of a high-pressure electronic injection system;
Figure 2 shows graphs of a number of electrical quantities measured in the Figure 1 circuit using the method according to the present invention and relative to the absence and presence of short-circuiting on the injector coil;
Figure 3 shows graphs of a number of electrical quantities measured in the Figure 1 circuit and relative to the absence and presence of an open circuit;
Figure 4 shows a flow chart illustrating the steps in one embodiment of the method according to the present invention.

### BEST MODE FOR CARRYING OUT THE INVENTION

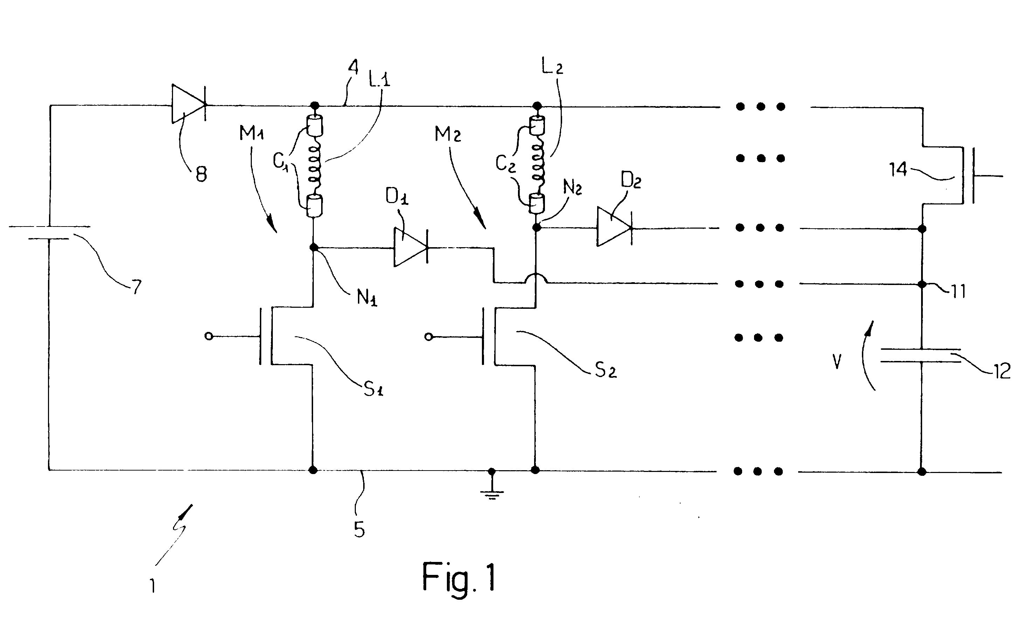

Figure 1 shows a simplified diagram of the circuit 1 for controlling a number of injectors. Circuit 1 comprises a number of actuator circuits M₁, M₂, ... connected parallel to one another between a supply line 4 and a ground line 5, and each comprising, in series, a coil L₁, L₂, ... for controlling a respective injector, a twisted cable C₁, C₂, ... of appropriate length, and a controlled switch S₁, S₂, ... . A voltage source 7 is also connected, via a decoupling diode 8, between supply line 4 and ground line 5.

The common node N₁, N_{2,} ... between each coil L₁, L₂, ... and each controlled switch S₁, S₂ ... is connected to a terminal 11 of a storage or tank capacitor 12 via a respective decoupling diode D₁, D₂, ... with its cathode connected to terminal 11; and terminal 11 is connected to supply line 4 via a controlled switch 14.

The method according to the present invention is performed during startup, as soon as the ignition key is turned, to prevent the engine from being started up in the event of a fault which may impair operation or even cause irreparable damage to the component parts of control circuit 1.

The method consists in briefly and successively turning on the controlled switches of the coils to connect the switches successively to the battery. At this step, if the coil is connected properly, the current through the supplied actuator circuit is low (due to the short connection time), and is high in the event of short-circuiting of the coil. When the controlled switch is turned off, the current from the previously supplied actuator circuit is transferred to storage capacitor 12 which therefore charges to a voltage depending on the amount of current transferred, which in turn is related to the current through the previously supplied actuator circuit. In the event of short-circuiting, the capacitor charges to a much higher voltage as compared with a properly connected coil, so that short-circuiting may be detected by calculating the voltage increase of the capacitor and comparing it with a threshold value.

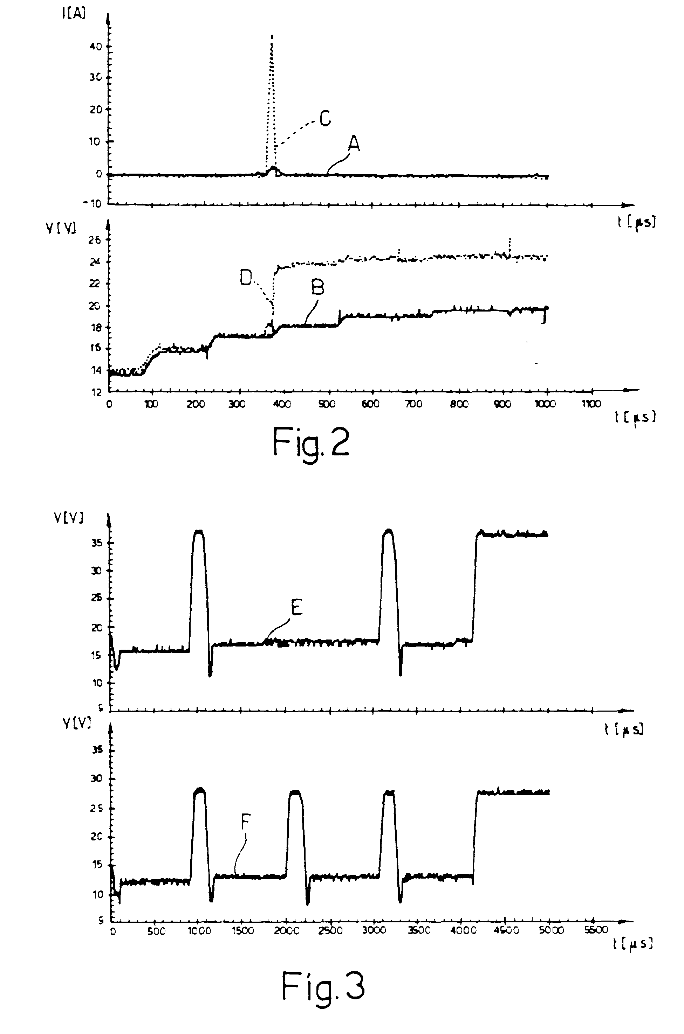

The above behaviour patterns are shown in Figure 2, which shows a graph of the current through the injector circuit and a corresponding graph of the capacitor voltage in the event of correct connection (curves A, B) and short-circuiting (curves C, D) of the coil.

After all the coils in the circuit have been short-circuit tested (with no fault being detected on any of the coils), a check is made to determine the presence of open circuits, for which purpose, the controlled switches of the coils are turned on successively, as for short-circuit testing, but for a greater length of time. In the event of an open circuit on the coil, no current flows through the coil, so that, when the respective controlled switch is turned off, no current is transferred to charge capacitor 12. In this case also, therefore, correct or incorrect connection of the injector coils may be detected by measuring the voltage increase of the capacitor.

Figure 3 shows graphs of the voltage of storage capacitor 12 in the event of an open circuit on a coil (curve E) and correct connection of all the coils (curve F relative to a different supply voltage value). In this test, storage capacitor 12 is discharged after each coil is tested, for better indicating, each time, the charge of the capacitor, the final value of which depends on various parameters, including the initial voltage prior to current transfer.

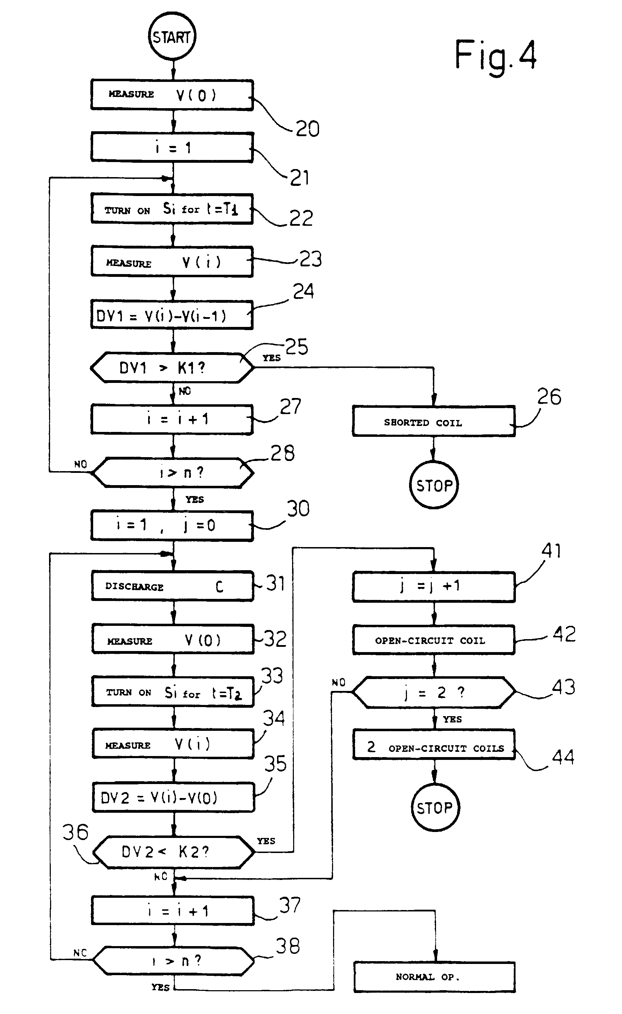

One embodiment will now be described with reference to Figure 4.

To begin with, block 20 measures the voltage V(0) of capacitor 12; block 21 sets an injector counter i to 1; and block 22 closes switch Sᵢ for a very short time T1, e.g. from 3 to 30 µs, which time must be long enough to permit current flow, but short enough to prevent damaging the controlled switch in the event of short-circuiting (in which case, the current may reach a few tens of Amps).

Block 23 then measures the voltage V(i) of the capacitor; block 24 calculates the difference DV1 = V(i) - V(i-1); and block 25 compares voltage difference DV1 with a threshold K1. If DV1 exceeds threshold K1, block 26 generates an error signal to prevent startup of the engine. Conversely, if DV1 is below threshold K1, block 27 increments the counter; and block 28 determines whether all the injectors have been tested. If they have not, block 28 goes back to block 22; if they have, block 28 goes on to block 30.

Block 30 initializes two injector and fault (open circuit) counters i and j; block 31 discharges capacitor 12 (e.g. by closing switch 14 until capacitor 12 reaches the voltage of source 7); block 32 measures the voltage V(0) of the discharged capacitor 12; block 33 turns on switch Sᵢ for a time T2, e.g. from 70 to 200 µs; block 34 measures the voltage V(i) of capacitor 12; block 35 calculates the difference DV2 = V(i) - V(0); and block 36 compares the voltage difference with a threshold K2. If DV2 is above threshold K2, block 36 goes on to block 37 which increments counter i, and to block 38 which determines whether all the injectors have been tested. If they have, the procedure is terminated. If they have not, block 38 goes back to block 31.

Conversely, if DV2 is below threshold K2, block 36 goes on to block 41 which increments the fault counter j; block 42 generates a signal indicating an open circuit on the i-th coil; and block 43 determines whether it is the first open circuit to be detected. If it is, block 43 goes back to block 37. Conversely, if a second open circuit is detected (j = 2), block 43 goes on to block 44 which signals an open circuit on the second coil, so that the diagnostic control system disables startup of the engine.

The method described therefore provides for indicating any faults without damaging the control circuit, by first performing the short-circuit test indicating the more hazardous condition and which, by virtue of the very short length of time the switches are closed, poses no risk to the circuit, and by subsequently performing the open-circuit test which may thus be performed in the most appropriate manner by closing the controlled switches for a greater length of time to allow a greater current flow and so indicate any open circuits with no danger of damaging the circuit.

Moreover, the method according to the present invention is straightforward and reliable, and may be program implemented with no complex, high-cost alterations to the circuitry.

## Claims

1. A fault diagnosis method for the injectors of internal combustion engine high-pressure injection systems, comprises the steps of: supplying an injector coil (L1, L2) for a predetermined time; discharging said coil into a storage capacitor (12); measuring the charge of said storage capacitor; and comparing said charge with a predetermined threshold said step of measuring said charge comprises the step of determining the voltage increase of said storage capacitor (12) as said coil (L1, 12) is discharged, characterized in that, to determine short-circuiting of said injector coil (L1, L2), said step of determining said voltage increase comprises the step of memorizing the charge value of said capacitor (12) immediately prior to said step of supplying said coil; measuring the voltage of said capacitor after said charging step; and determining the difference between said memorized charge value and said measured voltage.

2. A fault diagnosis method for the injectors of internal combustion engine high-pressure injection systems, comprises the steps of: supplying an injector coil (L1, L2) for a predetermined time; discharging said coil into a storage capacitor (12); measuring the charge of said storage capacitor; and comparing said charge with a predetermined threshold said step of measuring said charge comprises the step of determining the voltage increase of said storage capacitor (12) as said coil (L1, 12) is discharged, characterized in that, to determine the presence of open circuits of said injector coil (L1, L2), said step of determining said voltage increase comprises the step of discharging said capacitor (12) immediately prior to said step of supplying said coil; memorizing the discharge value of said capacitor; measuring the voltage of said capacitor after said charging step; and determining the difference between said memorized discharge value and said measured voltage.

3. A method as claimed in Claim 1, characterized in that it comprises the step of determining short-circuiting of said injector coil (L1, L2) and wherein said coil is supplied for a first very short time interval (T1)

4. A method as claimed in Claim 3, characterized in that said first time interval ranges from 3 to 30 µs.

5. A method as claimed in Claim 3 or 4, characterized in that said step of determining short-circuiting of said injector coil (L1, L2) is followed by the step of determining the presence of open -circuits and wherein said coil is supplied for a second time interval (T2) greater than said first time interval (T1).

6. A method as claimed in Claim 5, characterized in that said second time interval ranges from 50 to 200 µs.

7. A method as claimed in any one of the foregoing claims, characterized in that, in the event a short-circuit is detected, a signal is generated to prevent startup of the engine.

8. A method as claimed in any one of the foregoing Claims, characterized in that, in the event more than one open circuit is detected, a signal is generated to prevent startup of the engine.

## Patentansprüche

1. Verfahren zur Fehlererkennung bei Injektoren einer Brennkraftmaschine mit einem Hochdruckeinspritzsystem, bestehend aus den Schritten, Versorgen einer Injektorspule (L1, L2) für eine vorgebbare Zeit, Entladen der Injektorspule in einen Kondensator (12), Messen der Ladung des Kondensators, und Vergleichen der Ladung mit einem vorgegebenen Schwellwert, wobei zur Messung der Ladung der Spannungsanstieg des Kondensators (12) erfaßt wird, wenn die Injektorspule (L1, L2) entladen wird, dadurch gekennzeichnet, daß zur Erkennung eines Kurzschlusses der Injektorspule (L1, L2) zur Bestimmung des Spannungsanstieges der Spannungswert des Kondensators unmittelbar vor dem Versorgen der Injektorspule gespeichert wird, daß die Spannung am Kondensator nach dem Laden gemessen wird und die Differenz zwischen dem gespeicherten Wert und dem gemessenen Wert bestimmt wird.

2. Verfahren zur Fehlererkennung bei Injektoren einer Brennkraftmaschine mit einem Hochdruckeinspritzsystem, umfassend die Schritte: Versorgen einer Injektorspule (L1, L2) für eine vorgebbare Zeit, Entladen der Injektorspule in einen Kondensator (12), Messen der Ladung des Kondensators, und Vergleichen der Ladung mit einem vorgegebenen Schwellwert, wobei zur Messung der Ladung der Spannungsanstieg des Kondensators (12) erfaßt wird, wenn die Injektorspule (L1, L2) entladen wird, dadurch gekennzeichnet, daß zur Erkennung einer Leitungsunterbrechung der Injektorspule (L1, L2) zur Bestimmung des Spannungsanstieges der Kondensator (12) unmittelbar vor der Versorgung der Injektorspule entladen wird, daß der Spannungswert des entladenen Kondensators gespeichert wird, daß die Spannung am Kondensator nach dem Laden gemessen wird und die Differenz zwischen dem gespeicherten Wert und dem gemessenen Wert bestimmt wird.

3. Verfahren nach Anspruch 1, dadurch gekennzeichnet, daß es den Schritt umfaßt, daß ein Kurzschluß der Injektorspule (L1 und L2) erfaßt wird, wobei die Injektorspule für eine erste kurze Zeit beaufschlagt wird.

4. Verfahren nach Anspruch 3, dadurch gekennzeichnet, daß diese erste Zeit im Bereich zwischen 3 und 30 µs liegt.

5. Verfahren nach Anspruch 3 oder 4, dadurch gekennzeichnet, daß das dem Schritt der Bestimmung eines Kurzschlusses der Injektorspule (L1, L2) ein Schritt nachfolgt, in dem das Vorhandensein einer Leitungsunterbrechung geprüft wird, wobei die Injektorspule für eine zweite Zeit (T2) größer als die erste Zeit (T1) mit Strom beaufschlagt wird.

6. Verfahren nach Anspruch 5, dadurch gekennzeichnet, daß die zweite Zeit im Bereich zwischen 50 und 200 µs liegt.

7. Verfahren nach einem der vorhergehenden Ansprüche, dadurch gekennzeichnet, daß bei Vorliegen eines Kurzschlusses ein Signal erzeugt wird, daß den Start der Brennkraftmaschine verhindert.

8. Verfahren nach einem der vorhergehenden Ansprüche, dadurch gekennzeichnet, daß bei Vorliegen mehr als einer Leitungsunterbrechung, ein Signal erzeugt wird, daß einen Start der Brennkraftmaschine verhindert.

## Revendications

1. Procédé de diagnostic de défauts pour des injecteurs d'un système d'injection à haute pression de moteur à combustion interne, comprenant les étapes suivantes :
- alimentation d'un enroulement d'injecteur (L1, L2) pendant un temps prédéterminé,
- décharge de l'enroulement dans un condensateur de stockage (12),
- mesure de la charge du condensateur de stockage,
- comparaison de la charge à un seuil prédéterminé, cette opération de mesure de la charge comprenant l'état consistant à déterminer l'augmentation de tension du condensateur de stockage (12) pendant la décharge de l'enroulement (L1, L2),
caractérisé en ce que
pour déterminer un court-circuit d'enroulement d'injecteur (L1, L2), l'étape consistant à déterminer l'augmentation de charge comprend :
- la mise en mémoire de la valeur de la charge du condensateur (12) immédiatement avant l'étape d'alimentation de l'enroulement,
- la mesure de la tension du condensateur après l'étape de charge,
- et la détermination de la différence entre la valeur de la charge mise en mémoire et la tension mesurée.

2. Procédé de diagnostic de défauts des injecteurs d'un système d'injection à haute pression d'un moteur à combustion interne comprenant les étapes suivantes :
- alimentation d'un enroulement d'injecteur (L1, L2) pendant un temps prédéterminé,
- décharge de l'enroulement dans un condensateur de stockage (12),
- mesure de la charge du condensateur de stockage,
- comparaison de la charge à un seuil prédéterminé, cette étape de mesure de la charge comprenant une étape consistant à déterminer l'augmentation de tension du condensateur de stockage (12) pendant la décharge de l'enroulement (L1, L2),
caractérisé en ce que
pour déterminer la présence de circuits ouverts de l'enroulement d'injecteur (L1, L2), l'étape de détermination de l'augmentation de la tension comprend l'étape de décharge du condensateur (12) directement avant l'étape d'alimentation de l'enroulement,
- à mémoriser la valeur de la décharge du condensateur,
- à mesurer la tension du condensateur après l'étape de charge,
- et à déterminer la différence entre la valeur de la décharge mise en mémoire et la tension mesurée.

3. Procédé selon la revendication 1,
caractérisé en ce qu'
on détermine un court-circuit d'un enroulement d'injecteur (L1, L2), l'enroulement étant alimenté pendant un premier intervalle de temps très court (T1).

4. Procédé selon la revendication 3,
caractérisé en ce que
le premier intervalle de temps est compris entre 3 et 30 µs.

5. Procédé selon la revendication 3 ou 4,
caractérisé en ce que
la détermination du court-circuit de l'enroulement d'injecteur (L1, L2) est suivie par la détermination de l'existence de circuits ouverts et,
l'enroulement est alimenté pendant un second intervalle de temps (T2) supérieur au premier intervalle de temps (T1).

6. Procédé selon la revendication 5,
caractérisé en ce que
le second intervalle de temps est compris entre 50 et 200 µs.

7. Procédé selon l'une quelconque des revendications précédentes,
caractérisé en ce qu'
en cas de détection de court-circuit, on génère un signal pour éviter le démarrage du moteur.

8. Procédé selon l'une quelconque des revendications précédentes,
caractérisé en ce qu'
au cas où on détecte plus d'un circuit ouvert, on génère un signal pour interdire le démarrage du moteur.
